Europäisches Patentamt

European Patent Office

Office européen des brevets

(19)

(11) Publication number : **0 327 520 B1**

# (12) EUROPEAN PATENT SPECIFICATION

(45) Date of publication of patent specification :
**10.06.92 Bulletin 92/24**

(51) Int. Cl.⁵ : **A01D 17/10**

(21) Application number : **89850026.9**

(22) Date of filing : **30.01.89**

(54) An arrangement in a harvester.

(30) Priority : **03.02.88 NO 880475**

(43) Date of publication of application :
**09.08.89 Bulletin 89/32**

(45) Publication of the grant of the patent :
**10.06.92 Bulletin 92/24**

(84) Designated Contracting States :
**DE FR GB NL**

(56) References cited :
**DE-A- 3 109 209**
**DE-A- 3 201 260**
**US-A- 4 034 837**

(73) Proprietor : **UNDERHAUG A/S**
**P.O. Box 70**
**N-4350 Naerbo (NO)**

(72) Inventor : **Royneberg, Erling**
**Markaveien 4**
**N-4350 Naerbo (NO)**

(74) Representative : **Westerlund, Christer et al**
**L.A. Groth & Co Patentbyra AB, P.O. Box 6107**
**S-102 32 Stockholm (SE)**

EP 0 327 520 B1

Jouve, 18, rue Saint-Denis, 75001 PARIS

## Description

The invention relates to a harvester, especially a potato harvester, with an endless lath belt running about a driving roller which comprises drive portions of resiliently yielding material e.g. rubber provided with teeth or the like which teeth show a spacing equal to or not equal to the lath spacing.

A lath belt in a potato harvester is constructed with a series of laths or transverse rods the ends of which are attached to longitudinal carrier belts. It is known to design the carrier belts as toothed belts running around driving wheels. It is also known to utilize the laths or transverse rods with the lath belt running about a roller-shaped driving basket which has axially extending basket rods welded onto end plates and supporting the lath belt in the driving/turning area. The angular distance between basket rods is adapted to the distance or space between transversal rods. When the driving basket is rotating the basket rods mesh with the spaces between the laths of the lath belt, each basket rod being inserted behind a lath as a pusher.

Said known designs show a number of disadvantages. One such disadvantage is that the defined form-fit engagement may be disturbed by e.g. rocks falling between cooperating members. The carrying belts will also be subjected to stretch loads which may cause different elongation of the parallel carrying belts with resulting skewness. Utilization of a roller shaped driving basket entails the disadvantage that a lot of dust is stirred up. Also, the lath belt, especially the laths or transverse rods, will be worn down, at the same time as the basket rods will be worn. Even if the distance between basket rods in the peripheral direction is precisely adapted to the distance between laths in the lath belt it will occur that laths run on top of the basket rods and cause rattling.

From DE-B-11 74 556 it is known to use drive and turning rollers in the shape of rubber rollers or the like which are provided with teeth or tooth pockets with a different spacing than that of the laths in the lath belt. The drive roller may cooperate directly with the laths and/or the longitudinal carrying belts of the lath belt. In this manner, the above disadvantages are avoided because of the not completely form-fit mesh cooperation between driving roller and lath belt.

From NO-PS 152 581 a potato harvester is known comprising a lath belt driving roller in the shape of a cylindrical drum the surface of which has a mantle of rubber or a similar resiliently yielding material in the area of the periphery cooperating with the laths of the lath belt. Such a design will reduce noice. The laths will also have a good and even support against the drive roller, permitting utilization of relatively thin laths. This is supposed to provide a longer life of the lath belt. Working without a specific spacing, because the "teeth" of the driving roller are formed by the laths of the lath belt squeezing into the soft mantle, it will be possible readily to exchange a lath belt with another which has a different spacing between laths without any necessity of exchanging the driving roller.

In practical use it proved to be difficult to achieve a satisfactory driving cooperation when the soft mantle is completely smooth, and said known driving roller mantle is in practice, thus, provided with axially extending groves over at least portions of the length of the driving roller, so that a partly form-fit cooperation is achieved between driving roller and lath belt.

From DE-A1-31 09 209 is known a potato harvester with a series of laths, the ends of which are attached to carrier belts running about driving rollers having drive portions at their ends. The drive portions consist of toothed wheels or cylindrical rings.

Based on this state of technology it is an object of the present invention to provide a driving roller by the aid of which a good support for the laths is provided, as well as at least partially form-fit driving cooperation between the driving roller and the lath belt, and a uniform pull on the driving belt, with special importance being attached to the fact that intrusion of foreign bodies, e.g. rocks and the like, between the driving roller and the lath belt will not cause any disturbance of operation, and the length of the drive portions of the driving roller being adjustable.

This is achieved by the aid of an arrangement as stated above, the characterizing features of which are described in the claims.

By the invention several advantages are achieved. The smooth and firm roller member will form a good support for the laths of the lath belt when the latter runs over the driving roller The disc shaped roller members are the real driving members and they will art on the laths of the lath belt close to the carrying belts of the lath belt, to which the laths are attached at their ends. In this manner, the momentum load of the laths or transverse rods is reduced during transmission of driving force. Due to the resiliently yielding material of said disc shaped roller members they will have a driving effect on the lath belt with a complete or partial engagement of teeth. Thus, the teeth of the disc shaped members can engage in a form-fit manner with the spaces between laths in the lath belt and/or a more or less complete engagement may be achieved by the lath belts squeezing into the disc shaped roller members outside the tooth spaces. The build-up of discs in a stack package provides for a simple structure with a desired length of the drive portions. The discs are also simple and inexpensive members.

An especially advantageous embodiment is achieved if the disc shaped roller members are split between the centre hole and the outer circumference. Then the disks may be arranged on the shaft members from the side, as they are split. In the package the disks are provided with mutual angular displacement as regards their splits, so that the package does not show a split through-and-through.

The driving roller may, advantageously, be implemented by being constructed with a through shaft with a surrounding steel tube constituting the roller member. The steel tube is connected with the shaft by end plates to which the respective disk stack packs are attached.

Further features and advantages of the invention will appear from the following disclosure of an embodiment of the invention with reference to the drawings, in which

Figure 1 is a side elevation of a driving roller according to the invention,

Figure 2 shows a section in a larger scale of the driving roller in Figure 1,

Figure 3 is a sectional view through the driving roller along line III-III in Figure 2, and

Figure 4 is a semi-sectional view of a modified embodiment of the driving roller.

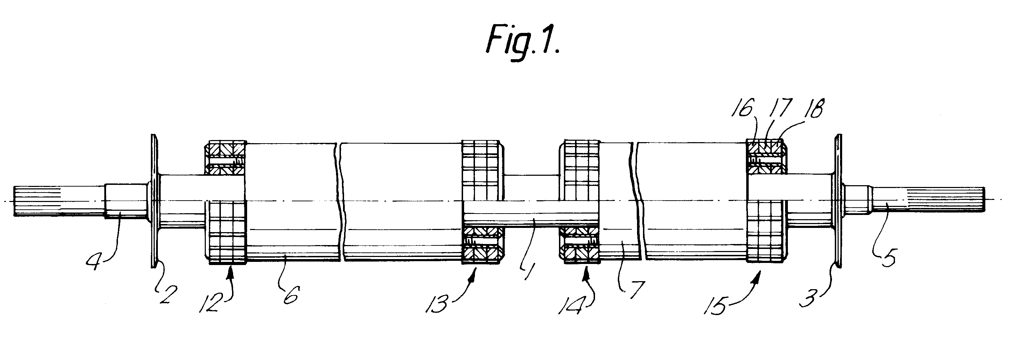

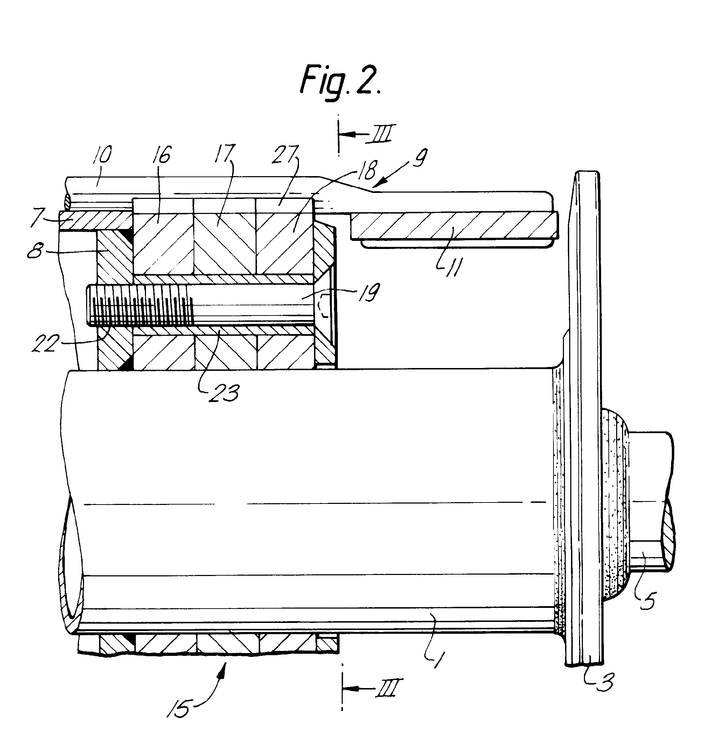

The driving roller shown in Figure 1 is constructed with a shaft 1 which is at both ends welded to a shaft collar 2,3, respectively. Shaft 1 is a steel tube (see Figure 2). From each collar 2,3 a solid shaft journal 4, and 5, respectively, extends, being welded to collar 2 or 3, respectively to be coaxial with shaft 1.

Shaft 1 passes through two steel tubes 6,7. At each end the steel tubes 6,7 are provided with end plates 8 (see Figure 2) which are welded to the tubes and are provided with holes for receiving shaft 1. End plates 8 are also welded to shaft 1, as shown in Figure 2.

The driving shaft is, thus, constructed with a steel tube shaft 1, which is in this case hollow, and on which coaxial steel tubes 6,7 are mounted to form a respective roller member with a smooth and firm surface or mantle for contact with the lath belt. The lath belt is not shown in Figure 1, but it is indicated in Figure 2, where it is designated 9. Lath belt 9 is constructed with laths or transversal rods 10 in a known manner attached to longitudinal carrier belts 11.

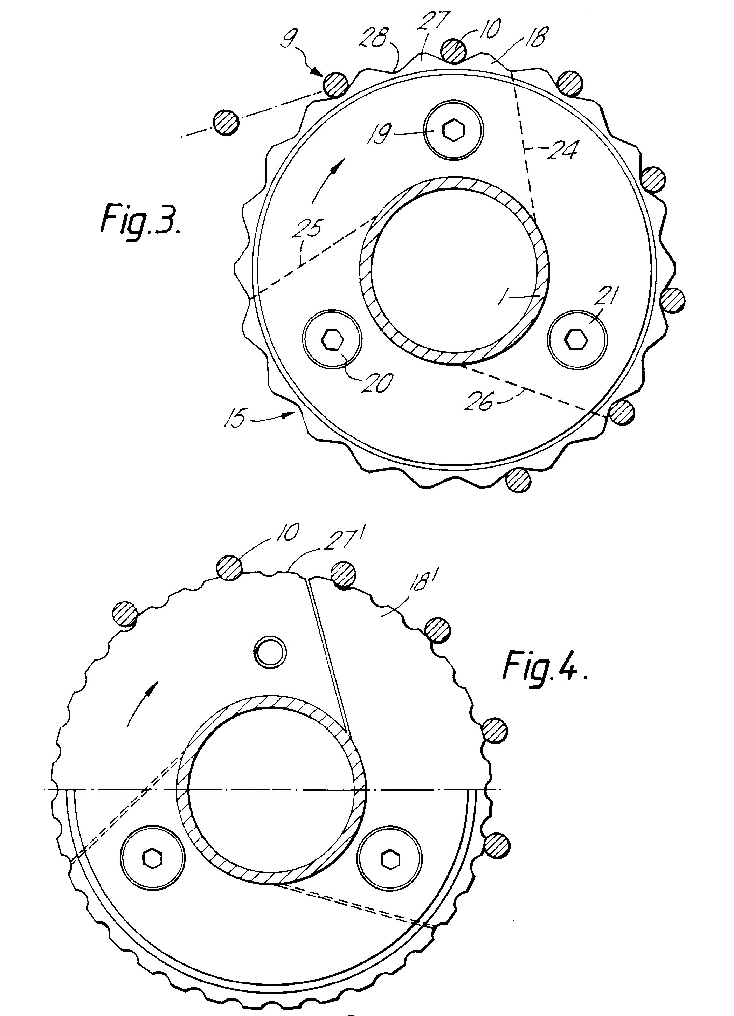

At each end of the roller members, a disk stack package 12,13, and 14,15, respectively is arranged. Each disk stack package is in the shown embodiment built up of three assembled disk shaped roller members 16, 17, and 18. For a closer illustration of the disk stack packages, we refer especially to Figures 2 and 3, showing disk stack package 15.

As mentioned, each disk stack package comprises three disk shaped roller members 16, 17, 18. They are slid onto shaft 1 with disk shaped roller member 16 being in contact with end plate 8, and disk shaped roller member 17 being in contact with roller member 16, whereas roller member 18 is in contact with roller member 17. All three roller members 16, 17, 18 are clamped together by three screws 19, 20, 21 (Figure 3) which extend through apertures made in roller members 16, 17, 18 to this end and are screwed into corresponding threaded apertures 22 in end plate 8. In the disk stack package each screw 19, 20, 21 is surrounded by a lining bushing 23.

In order to permit mounting and dismantling of the separate roller members 16, 17, 18 they are split, as shown with dashed lines 24, 25, and 26 in Figure 3. It will also appear from Figure 3 that the separate roller members 16, 17, 18 are angularly displaced mutually as regards splits 24, 25, 26. The package of roller members will, thus, not show a split through-and-through.

Each of the disk shaped roller members 16, 17, 18 is provided with teeth 27 on its periphery. Teeth 27 and the pockets 28 between them are relatively low or shallow, respectively, i.e. the radial extent is primarily smaller than the diameter of a lath 10 in lath belt 9. The space between the teeth is preferably equal to the space between laths in the lath belt but may be different from the space between laths in the lath belt. In Figure 3 the space between the teeth is approximately half of the space between laths.

Roller members 16, 17, 18 in each pack 12, 13, 14, 15 consist of a soft resilient material, preferably rubber, so that the laths may squeeze into the material of the roller members as shown in Figure 4, where a variant of the disk shaped roller members is illustrated. As opposed to the embodiment of Figure 3 the roller members of Figure 4 are provided with a different tooth spacing which is not adapted to the lath spacing. Some laths will, thus, ride on teeth 27' or lie in a tooth pocket, respectively, and it is also indicated in Figure 4 how laths 10 may squeeze into the tooth mantle.

It will, thus, be understood that a complete engagement is not critical, but that teeth and tooth pockets of roller members 16, 17, 18, 18' only serve to provide a partially form-fit engagement. Such a partial form-fit engagement is furthermore provided due to the fact that the material used for the roller members is soft, so that laths 10 can squeeze more or less into the outer surface or mantle.

The reason for having a divided driving roller in Figure 1, i.e. that there are two roller members 6,7, is that it is intended for a lath belt having three carrying belts, i.e. two along the lateral edges of the lath belt and a central carrying belt. If desired, more roller members may be used, or only one, if that is desired.

## Claims

1. An arrangement in a harvester, especially a potato harvester, with an endless lath belt (9) running about a driving roller which comprises drive portions (12-15) of a resiliently yielding material, e.g. rubber material provided with teeth (27) or the like, said teeth having a spacing that is equal to or different from the lath spacing, the driving roller comprising a roller member (6,7) forming a smooth and firm surface or mantle for contact with the lath belt (9), and from the ends of the roller member extending, respectively, a coaxial shaft member (1) with a diameter less than that of the roller member, **characterized** in that at said ends of the roller member (6,7) disc shaped roller members (16,17,18) are provided to form said drive portions which are assembled in disc stack packs (12,13,14,15) and which are concentrically slid onto the respective shaft members (1).

2. An arrangement as defined in claim 1, **characterized** in that the disc shaped roller members (16,17,18) are split (24,25,26) between their centre holes and circumference, and that the disc shaped roller members (16,17,18) in the disc stack packs (12,13,14,15) are arranged angularly displaced mutually with reference to their splits (24,25,26).

3. An arrangement as defined in claim 1 or 2, **characterized** in that the driving roller comprises a through shaft (1) with a surrounding steel tube (6;7) which forms the roller member, said steel tube being connected with shaft (1) by end plates (8) to which the respective disc stack packs (12,13,14,15) are attached.

4. An arrangement as defined in claim 3, **characterized** in that the disc stack packs (12,13,14,15) are attached to respective end plates (8) by the aid of screws (19,20,21).

## Patentansprüche

1. Anordnung an einer Erntemaschine, insbesondere einer Kartoffelerntemaschine, mit einem endlosen Lattenband (9), das über eine Antriebsrolle läuft, die Antriebsabschnitte (12 - 15) aus federnd nachgiebigem Material, z.B. mit Zähnen (27) od.dgl. versehenem Gummimaterial, umfaßt, welche Zähne eine Teilung aufweisen, die gleich oder unterschiedlich von der Lattenteilung ist, wobei die Antriebsrolle weiters einen Rollenabschnitt (6, 7) umfaßt, der eine glatte und feste Oberfläche oder Mantel für den Kontakt mit dem Lattenband (9) bildet und von dessen Enden sich jeweils ein koaxialer Wellenteil (1) mit kleinerem Durchmesser als der Durchmesser des Rollenabschnitts herauserstreckt, dadurch gekennzeichnet, daß an den Enden des Rollenabschnitts (6, 7) scheibenförmige Rollenteile (16, 17, 18) vorgesehen sind, welche die Antriebsabschnitte bilden und zu Scheibenstapelpaketen (12, 13, 14, 15) zusammengesetzt sind, die konzentrisch auf den jeweiligen Wellenteil (1) aufgeschoben sind.

2. Anordnung nach Patentanspruch 1, dadurch gekennzeichnet, daß die scheibenförmigen Rollenteile (16, 17, 18) zwischen ihren Zentrumslöchern und ihrem Umfang geteilt (24, 25, 26) sind und daß die scheibenförmigen Rollenteile (16, 17, 18) in den Scheibenstapelpaketen (12, 13, 14, 15) in bezug auf ihre Teilungsfugen (24, 25, 26) gegenseitig winkelverschoben angeordnet sind.

3. Anordnung nach Patentanspruch 2 oder 3, dadurch gekennzeichnet, daß die Antriebsrolle eine durchgehende Welle (1) mit einem umgebenden Stahlrohr (6, 7) umfaßt, das den Rollenabschnitt bildet, wobei das Stahlrohr mit der Welle (1) durch Endplatten (8) verbunden ist, an welchen die jeweiligen Scheibenstapelpakete (12, 13, 14, 15) befestigt sind.

4. Anordnung nach Patentanspruch 3, dadurch gekennzeichnet, daß die Scheibenstapelpakete (12, 13, 14, 15) mit Hilfe von Schrauben (19, 20, 21) an den jeweiligen Endplatten (8) befestigt sind.

## Revendications

1. Dispositif dans une machine de récolte, spécialement une machine de récolte de pommes de terre, avec une courroie à lattes sans fin (9) courant autour d'un rouleau entraîneur qui comprend des parties d'entraînement (12-15) réalisées en un matériau élastique, par exemple un matériau caoutchouceux, pourvu de dents (27) ou similaire, lesdites dents ayant un pas qui est égal ou différent du pas des lattes, le rouleau entraîneur comprenant un rouleau (6,7) formant une surface lisse et ferme ou un manchon pour le contact avec la courroie à lattes (9), un arbre coaxial (1) s'étendant à partir des extrémités du rouleau respectivement, et présentant un diamètre inférieur à celui du rouleau, caractérisé en ce qu'auxdites extrémités du rouleau (6,7) des rouleaux en forme de disques (16,17,18) sont prévus pour former lesdites parties d'entraînement qui sont assemblées en ensembles de disques empilés (12,13,14,15) et qui sont glissés de façon concentriques sur les arbres respectifs (1).

2. Dispositif tel que défini dans la revendication 1, caractérisé en ce que les rouleaux en forme de disques (16,17,18) sont fendus (24,25,26) entre leur trou central et leur circonférence, et en ce que les rouleaux en forme de disques (16,17,18) dans les ensembles de disques empilés (12,13,14,15) sont disposés de façon à être décalés angulairement réciproquement par rapport à leurs fentes (24,25,26).

3. Dispositif tel que défini dans la revendication 1 ou 2, caractérisé en ce que le rouleau entraîneur comprend un arbre traversant (1) avec un tube d'acier l'entourant (6,7) qui forme le rouleau, ledit tube d'acier étant relié à l'arbre (1) par des plaques d'extrémités (8) auxquelles les ensembles de disques empilés correspondants (12,13,14,15) sont fixés.

4. Dispositif tel que défini dans la revendication 3, caractérisé en ce que les ensembles de disques (12,13,14,15) sont fixés aux plaques d'extrémités correspondantes (8) à l'aide de vis (19,20,21).

Fig.1.

EP 0 327 520 B1

# Fig. 2.

Fig.3.

Fig.4.